# EUROPEAN PATENT APPLICATION

(11) **EP 2 033 939 A1**
(43) Date of publication of application: **11.03.2009**
(21) Application number: 07767008.1
(22) Date of filing: 31.05.2007
(51) Int. Cl.: C01G 25/00, H01M 8/02

(54) **METHOD FOR PRODUCING METAL OXIDE PARTICLE**

(30) Priority: 05.06.2006 JP 2006155779
(71) Applicant: Nissan Chemical Industries, Ltd., Chiyoda-ku, Tokyo 101-0054 (JP)
(72) Inventor: OHMORI, Yutaka, Sodegaura-shi, Chiba 299-0266 (JP); KATO, Hirokazu, Sodegaura-shi, Chiba 299-0266 (JP); YAMAGUCHI, Kenji, Sodegaura-shi, Chiba 299-0266 (JP)
(74) Representative: Escher, Thomas
(86) International application number: PCT/JP2007/061085
(87) International publication number: WO 2007/142116

(57) **Abstract**

There is provided a method for stably producing metal oxide solid solution particle at low temperature, wherein an alkaline zirconia sol is used as a raw material which is mixed with a metal compound, and then dried and fired. Specifically, there is disclosed a method for producing metal oxide particle (A3) such as zirconia particle in which metal oxides are solid-solubilized, comprising: a step (I) for obtaining metal oxide (A2) sol such as zirconia sol containing a precursor of a metal oxide by mixing an alkaline zirconia (A1) sol which is obtained by a method including a step (i) for heating a zirconium salt (B2) at 60-110°C in an aqueous medium containing a carbonate of quaternary ammonium and a step (ii) for performing a hydrothermal treatment at 110-250°C, with a compound (B1) containing an element selected from a group consisting of the group II and group III elements of the periodic table; and a step (II) for drying the thus-obtained sol and then firing a resultant substance at a temperature of 500-1200°C.

## Description

### TECHNICAL FIELD

The present invention according to some aspects described in the present application relates to a method for producing metal oxide particle, and to a method for producing metal oxide particle such as zirconia particle in which stabilizer can easily be solid-solubilized in an easy step at a low temperature.

### BACKGROUND ART

As a method for producing zirconia particle, the following methods have been described:
a method for obtaining zirconia particle through addition of ammonia water to a suspension of hydrated zirconia particle in which suspension stabilizer is dissolved, filtration, water washing, and then calcination (Patent Document 1);
a method for obtaining zirconia raw material particle through neutralization of hydrated zirconia sol obtained by hydrolysis of zirconium salt aqueous solution with urea or an ammonia compound (Patent Document 2);
a method for obtaining zirconia particle through addition of a hydrated zirconia sol obtained by hydrolysis of zirconium salt aqueous solution with an alkaline metal compound, thereafter preparation of hydrated zirconia gel in which an amount of alkaline metal is moderated by controlling a washing step, and calcination (Patent Document 3);
a method for obtaining zirconia particle through calcination at 800-1200°C of a mixture that includes a hydrated zirconia sol obtained by hydrolysis of zirconium salt aqueous solution and yttrium compound and contains 4-10 mol% yttria and grinding of the mixture into fine powder which mean particle size falls within a range of 0.1-1.0 µm (Patent Document 4);
a method for producing a sol of a metal oxide including a step of heating at 60-110°C of a metal compound such as a zirconium compound, magnesium compound, calcium compound, yttrium compound, aluminum compound, or cerium compound in an aqueous medium containing a carbonate of quaternary ammonium and a step of a hydrothermal treatment at 110-250°C, and a method for obtaining zirconia sol through drying of a sol containing zirconium alone obtained by the producing method, firing at 700°C, and wet grinding (Patent Document 5).
[Patent Document 1]
Japanese Patent Application Publication No. JP-A-63-129017 (Claims)
[Patent Document 2]
Japanese Patent Application Publication No. JP-A-4-31359 (Claims)
[Patent Document 3]
Japanese Patent Application Publication No. JP-A-6-32615 (Claims)
[Patent Document 4]
Japanese Patent Application Publication No. JP-A-10-139436 (Claims)
[Patent Document 5]
International Patent Application pamphlet No. WO2006/019004 (Claims)

### DISCLOSURE OF THE INVENTION

### [Problem to be Solved by the Invention]

Various kinds of methods for producing metal oxide particle containing zirconium have been proposed, including a method (Patent Document 1 and Patent Document 2) in which an aqueous solution containing zirconium salt is neutralized with alkali and washed to produce particle containing zirconia from resulting precipitate in which gel-form precipitate is often generated. The precipitate is difficult to be separated from mother liquor or other counter ions, leading easily to residues of acid group such as Cl or alkali as impurities. In addition, these precipitates are aggregated solidly during drying and firing and it takes long to grind them into particle. A method using a sol containing hydrated zirconia obtained by hydrolysis of an aqueous solution of a metal compound such as zirconium salt (Patent Document 3 and Patent Document 4) needs a prolonged period of time, 100 hours or more in some instances, for hydrolysis reaction while boiling to obtain a hydrated zirconia sol, showing poor productivity. Because the resultant hydrated zirconia sol is fine, steps including filtration and water wash of hydrated zirconia sol is troublesome and a step such as aggregation reduces a specific surface area drastically. In Patent Document 5, there is no disclosure of specific description on zirconia particle in which a magnesium compound, calcium compound, yttrium compound, aluminum compound, or cerium compound is solid-solubilized.
The present invention according to some aspects described in the present application is a method for producing metal oxide particle such as zirconia in which metal oxides are solid-solubilized stably at low temperature through mixing zirconia sol, preferably an alkaline zirconia sol, used as a raw material with a metal compound, drying, and firing.

### [Means for Solving the Problem]

The present invention described in the present application provides a method, as a first aspect, for producing zirconia particle (A3) in which metal oxides are solid-solubilized, the method including a step (I) for obtaining zirconia (A2) sol containing a precursor of a metal oxide by mixing an alkaline zirconia (A1) sol which is obtained by a method including a step (i) for heating a zirconium salt (B2) at 60-110°C in an aqueous medium containing a carbonate of quaternary ammonium and a step (ii) for performing a hydrothermal treatment at 110-250°C, with a compound (B1) containing an element selected from a group consisting of the group II and group III elements of the periodic table; and a step (II) for drying the thus-obtained sol and then firing a resultant substance at a temperature of 500-1200°C;
a method, as a second aspect, for producing metal oxide particle (A3') in which metal oxides are solid-solubilized, the method including a step (I) for obtaining a sol of a metal oxide (A2') containing a precursor of a metal oxide by mixing a sol of an alkaline metal oxide (A1') which is obtained by a method including a step (i) for heating a zirconium salt (B2) and a compound (B3) containing an element selected from a group consisting of the group II and group III elements of the periodic table at 60-110°C in an aqueous medium containing a carbonate of quaternary ammonium and a step (ii) for performing a hydrothermal treatment at 110-250°C, with a compound (B1) containing an element selected from a group consisting of the group II and group III elements of the periodic table; and a step (II) for drying the thus-obtained sol and then firing a resultant substance at a temperature of 500-1200°C;
the method, as a third aspect, described in the first or second aspects, in which the step (I) includes mixing of the(A1) sol or the (A1') sol with the compound (B1) at a mass ratio Bs/As of 0.01-1.0, where the mass (As) is obtained by conversion of a solid content of the (A1) sol or the (A1') sol into a metal oxide, and the mass (Bs) is obtained by conversion of a solid content of the compound (B1) containing an element selected from a group consisting of the group II and group III elements of the periodic table into a metal oxide;
the method, as a fourth aspect, described in the second aspect, in which the step (i) includes mixing of the zirconium salt (B2) with the compound (B3) at a mass ratio Bs/As of 0.01-1.0, where the mass (As) is obtained by conversion of a solid content of the zirconium salt (B2) into ZrO₂, and the mass (Bs) is obtained by conversion of a solid content of the compound (B3) containing an element selected from a group consisting of the group II and group III elements of the periodic table into a metal oxide;
the method, as a fifth aspect, described in any one of the first to fourth aspects, in which the compound (B1) containing an element selected from a group consisting of the group II and group III elements of the periodic table is at least one type of compound selected from a group consisting of calcium compounds, magnesium compounds, yttrium compounds, aluminum compounds, cerium compounds, and scandium compounds;
the method, as a sixth aspect, described in the second or fourth aspect, in which the compound (B3) containing an element selected from a group consisting of the group II and group III elements of the periodic table is at least one type of compound selected from a group consisting of calcium compounds, magnesium compounds, yttrium compounds, aluminum compounds, cerium compounds, and scandium compounds;
the method, as a seventh aspect, described in any one of the first to sixth aspects in which the zirconium salt (B2) is an oxyzirconium salt;
the method, as an eighth aspect, described in any one of the first to seventh aspects, in which the carbonate of quaternary ammonium is either (NR₄)₂CO₃, NR₄HCO₃ or a mixture of them (where R represents a hydrocarbon group); and
the method, as a ninth aspect, described in the eighth aspect, in which R represents a methyl group.

### [Effects of the Invention]

The present invention according to some aspects described in the present application relates to a method for producing zirconia particle in which metal oxides are solid-solubilized, the method including mixing a sol of an alkaline zirconia with a compound of calcium, magnesium, yttrium, aluminum, cerium, scandium or the like, and drying and calcining the resultant liquid medium.
This metal oxide particle has good formability and is well sintered. A method of the present invention according to some aspects described in the present application enables easy production through a simple process and, is especially suitable for producing zirconia particle in which calcium oxide, magnesium oxide, yttrium oxide, aluminum oxide, cerium oxide, scandium oxide, or the like is solid-solubilized at a low temperature.
These properties can be utilized in an area of ceramic raw material for structure such as a precision processing part, an optical connector part, and a component of a mill; a solid electrolyte used in a solid oxide fuel cell; a solid electrolyte used in a gas sensor that can detect a concentration of oxygen and NOₓ gas in exhaust gas from an engine or the like; or a material for various catalyst carriers.

### BEST MODES FOR CARRYING OUT THE INVENTION

A first method of the present invention according to some aspects described in the present application is a method for producing metal oxide particle (A3), the method including a step (I) for obtaining zirconia (A2) sol containing a precursor of a metal oxide by mixing alkaline zirconia (A1) sol which is obtained by a method including a step (i) for heating a zirconium salt (B2) at 60-110°C in an aqueous medium containing a carbonate of quaternary ammonium and a step (ii) for performing a hydrothermal treatment at 110-250°C, with a compound (B1) containing an element selected from a group consisting of the group II and group III elements of the periodic table; and a step (II) for drying the thus-obtained sol and then firing a resultant substance at a temperature of 500-1200°C.
The first method includes preferably the step (I) in which the (A1) sol with the compound (B1) are mixed at a mass ratio Bs/As of 0.01-1.0, or 0.02-0.8, or 0.03-0.5, where the mass (As) is obtained by conversion of a solid content of the alkaline zirconia (A1) sol into a metal oxide, and the mass (Bs) is obtained by conversion of a solid content of the compound (B1) containing an element selected from a group consisting of the group II and group III elements of the periodic table into a metal oxide.
When the Bs/As value is set within a range of 0.03-0.5, the zirconia (A2) sol containing a precursor of a metal oxide with improved storage-stability can be obtained.

For the alkaline zirconia (A1) sol used as a raw material of the first method, an alkaline zirconia sol with a pH value of 8-12 can be used preferably. A well-known zirconia sol can be used for this alkaline zirconia sol, or alkaline zirconia sol described below can preferably be used.

The alkaline zirconia (A1) sol as a raw material can be obtained, for example, using a method including a step (i) for heating the zirconium salt (B2) at 60-110°C in an aqueous medium containing a carbonate of quaternary ammonium and a step (ii) of hydrothermal treatment at 110-250°C.
A carbonate of quaternary ammonium includes (NR₄) ₂CO₃ and NR₄HCO₃ which can be used solely or in a mixture. Quaternary ammonium ion in these carbonates of quaternary ammonium includes one having hydrocarbon group with 1-18 carbons, these hydrocarbon groups includes, for example, saturated or unsaturated chain hydrocarbon group, alicyclic or aromatic cyclic hydrocarbon group. Saturated or unsaturated chain hydrocarbon group includes, for example, methyl group, ethyl group, propyl group, isopropyl group, octyl group, decyl group, octadecyl group, ethynyl group, propenyl group, or the like. Cyclic hydrocarbon group includes phenyl group, tolyl group, styryl group, benzyl group, naphthyl group, anthryl group, or the like. Especially, hydrocarbon group with a carbon number of 1-4 is favorable for these quaternary ammonium ions including, for example, methyl group, ethyl group, propyl group, and isopropyl group, and tetramethylammonium hydrogen carbonate made up of 4 methyl groups can suitably be used.
When a carbonate containing an ammonium ion other than a quaternary ammonium ion is used as the above-mentioned carbonate, as expected, the stable zirconia (A1) sol cannot be obtained. When, for example, tertiary ammonium ion such as (CH₃)₃HN, secondary ammonium ion such as (CH₃)₂H₂N, primary ammonium ion such as (CH₃)H₃N, or ammonium ion NH₄ is used, a fully stable zirconia (A1) sol cannot be obtained.

For production of the alkaline zirconia (A1) sol as a raw material, a carbonate of quaternary ammonium is available in the form of an aqueous solution containing at a proportion of 30-60% by mass, and, especially, an aqueous solution containing a carbonate of quaternary ammonium at a proportion of 44.5% by mass of quaternary ammonium hydroxide is commercially available easily. A concentration of a carbonate of quaternary ammonium can be determined through a method for converting into quaternary ammonium hydroxide.
As the zirconium salt (B2) used for production of the alkaline zirconia (A1) sol as a raw material, an oxyzirconium salt such as zirconium oxychloride and zirconium oxycarbonate is used. Especially, zirconium oxycarbonate is preferably used.

An alkaline aqueous medium is prepared by adding a carbonate of quaternary ammonium into an aqueous medium. Here, using quaternary ammonium hydroxide, but not a carbonate of quaternary ammonium, does not provide a fully stable sol of zirconia (A1) but provide slurry double layer. Using another alkali source, for example sodium hydroxide, does not provide stable hydrolysate of zirconium salt, and hydrothermal treatment of such hydrolysate does not provide a stable zirconia (A1) sol. However, a carbonate of quaternary ammonium and another alkali source, for example a water soluble inorganic salt including sodium hydroxide, potassium hydroxide, lithium hydroxide, and ammonia; an amine including n-propylamine, monoethanolamine, and triethanolamine; and an water soluble organic salt including monomethyltriethyl ammonium hydroxide, and tetramethylammonium hydroxide, or a carbonate other than a carbonate of quaternary ammonium, for example ammonium carbonate, can be used in combination. When alkaline substances are used as a mixture, a mass ratio of a carbonate of quaternary ammonium and another alkaline substance, that is, (a carbonate of quaternary ammonium) : (another alkaline substance), is preferably 1:0.01-1.

The step (i) for producing the alkaline zirconia (A1) sol as a raw material is a step in which the zirconium salt (B2) is heated at 60-110°C in an aqueous medium containing a carbonate of quaternary ammonium.
The aqueous medium used in the step (i) for producing the alkaline zirconia (A1) sol as a raw material has a pH value of 9-12, and a content of a carbonate of quaternary ammonium is 10-35% by mass in this aqueous medium. A zirconium salt is contained at 5-20% by mass of ZrO₂ in this aqueous medium. In the step (i), full hydrolysis is not induced at 60°C or lower heating temperature, therefore, a stable zirconia (A1) sol is not obtained by a hydrothermal treatment of the resultant substance. The first step at 110°C or higher will not induce aging through hydrolysis, leading to unpreferable direct hydrothermal treatment. The duration of the step (i) is usually 1-20 hours.

The step (ii) for producing the alkaline zirconia (A1) sol as a raw material is a step in which a hydrothermal treatment is conducted at 110-250°C after the step (i). A temperature of 110°C or lower will not induce satisfactory hydrothermal treatment, while a temperature of 250°C or higher will need a large-scale device. This hydrothermal treatment is conducted using an autoclave. The duration of the step (ii) is 1-20 hours usually. Hydrolysate of zirconium salt becomes zirconia particle through this hydrothermal treatment. Zirconia particle obtained through this step has a diameter within a range of 20-300 nm under observation using a transmission electron microscope.

A liquid obtained through the step (ii) is alkaline with a pH value of 8-12. Although it can acceptably be zirconia (A1) sol as it is, by adding a step (iii) in which pure water washing is performed using a device such as one for ultrafiltration, unnecessary salt can be removed out and highly purified alkaline zirconia (A1) sol can be obtained.
An alkaline zirconia (A1) sol obtained through this step (iii) has properties including a pH value of 8-12, a specific surface area of 50 m²/g-300 m²/g, a concentration of 30-60% by mass, an electric conductivity of 2000-10000 µS/cm, a viscosity of 1-30 mPa·s. A particle size falls within a range of 20-300 nm.
This alkaline zirconia (A1) sol exists stably for 1 month or longer under the condition of 50°C.

The alkaline zirconia (A1) sol as a raw material can contain an additive such as a water soluble inorganic salt including sodium hydroxide, potassium hydroxide, lithium hydroxide, and ammonia; an amine including n-propylamine, monoethanolamine, and triethanolamine; and an water soluble organic salt including monomethyltriethyl ammonium hydroxide, and tetramethylammonium hydroxide.
The alkaline zirconia (A1) sol can be used at a pH range of 8-12, a concentration range of 10-60% by mass in the step (I) of the present invention according to some aspects described in the present application.

In a step (I) for producing zirconia (A2) sol containing a precursor of a metal oxide of the first aspect of the present invention, the compound (B1) containing an element selected from a group consisting of the group II and group III elements of the periodic table is used as an aqueous solution of the compound.
The compound (B1) containing an element selected from a group consisting of the group II and group III elements of the periodic table is at least one selected from a group consisting of calcium compounds, magnesium compounds, yttrium compounds, aluminum compounds, cerium compounds, and scandium compounds, and yttrium compounds, aluminum compounds, cerium compounds, and scandium compounds are preferably used. These compounds include an inorganic acid salt such as halogen acid salt, sulfate, carbonate, hydrogen carbonate, hydrogensulfate, and hydrogenphosphate; and organic acid salt such as hydroxide, oxalate, formate, acetate, lactate, citrate, and maleate.
For example, calcium salts such as calcium nitrate, calcium dihydrogenphosphate, calcium hydrogencarbonate, calcium hydrogensulfate, calcium formate, and calcium acetate;
magnesium salts such as magnesium chloride, magnesium nitrate, magnesium sulfate, magnesium hydrogensulfate, magnesium formate, and magnesium acetate;
yttrium salts such as yttrium chloride, yttrium iodide, yttrium nitrate, yttrium sulfate, yttrium carbonate, yttrium acetate, and yttrium oxalate;
aluminum salts such as aluminum chloride, aluminum nitrate, aluminum sulfate, aluminum hydroxide, aluminum acetate, and aluminum lactate;
cerium compounds such as cerium nitrate, cerium sulfate, cerium carbonate, cerium chloride, and cerium acetate; and
scandium compounds such as scandium chloride, scandium nitrate, scandium sulfate, and scandium acetate are included.

A method in which these metal compounds (B1) are mixed with the alkaline zirconia sol (A1) in an aqueous solution is preferable. An aqueous solution of the compound (B1) containing an element selected from a group consisting of the group II and group III elements of the periodic table is preferably used within a concentration range of 1-50% by mass.
Mixing of the alkaline zirconia sol (A1) with an aqueous solution of the compound (B1) containing an element selected from a group consisting of the group II and group III elements of the periodic table is accomplished through a method in which the alkaline zirconia sol (A1) is added to an aqueous solution of (B1), a method in which the aqueous solution of (B1) is added to the alkaline zirconia sol (A1), or a method in which both are mixed concomitantly.
A ratio Bs/As of 0.01 or less means a decreased amount of a stabilizer, causing limited properties such as sinterability and durability of metal oxide particle in which the stabilizer is solid-solubilized, while the ratio of more than 1.0 suggests the possibility that uniformity of sol mixture obtained through the step (I) may be impaired, causing easy obtainment of metal oxide particle in which the stabilizer is nonuniformly solid-solubilized after drying and firing of this sol mixture and limited properties such as sinterability and durability.
A precursor of a metal oxide is a substance that is changed into a metal oxide by firing at 500-1200°C in the later step (II). Although the compound (B1) containing an element selected from a group consisting of the group II and group III elements of the periodic table is in multiple forms such as a metal ion, metal hydroxide, and metal oxide in the aqueous sol, it is not completely in the form of a metal oxide but a precursor of a metal oxide when mixed with an alkaline zirconia (A1) sol. Therefore, a mixture of a precursor of a metal oxide and the zirconia (A1) sol is the zirconia (A2) sol containing a precursor of a metal oxide.

In the first method of the present application, in the case of mixing at a mass ratio Bs/As of 0.03-0.5, where the mass (As) is obtained by conversion of a solid content of an alkaline zirconia (A1) sol into a metal oxide, and the mass (Bs) is obtained by conversion of a solid content of the compound (B1) containing an element selected from a group consisting of the group II and group III elements of the periodic table into a metal oxide, the compound (B1) containing an element selected from a group consisting of the group II and group III elements of the periodic table plays a role as a stabilizer of zirconia.
In an alkaline zirconia (A1) sol of the present invention according to some aspects described in the present application, the surface of the zirconia particle is charged negative. As the compound (B1) containing an element selected from a group consisting of the group II and group III elements of the periodic table as a stabilizer, for example yttrium, aluminum, cerium, and scandium compounds, an acid compound is preferably used. Mixing of an alkaline zirconia (A1) sol with these stabilizers causes neutralization of alkali ion contained in an alkaline zirconia (A1) sol with acid ion of the compound (B1) to generate salt, while a metal ion of the compound (B1) becomes exist as a free cation. As a result, metal ion of the compound (B1) attaches on the surface of negatively charged zirconia particle.
Moreover, the alkaline zirconia (A1) sol used in the present invention according to some aspects described in the present application is characterized by the form of zirconia particle that can be mostly observed as aggregated particle with a particle size within a range of 20-300 nm of aggregated or bound primary particle around 10 nm using a transmission electron microscope. Mixing of this alkaline zirconia (A1) sol with yttrium, aluminum, cerium, and scandium compounds used as the compound (B1) causes metal ion of the compound to enter into a fine gap between aggregated particles of the alkaline zirconia (A1) sol and to be adsorbed to the periphery of the primary particle of around 10 nm.
Due to these effects, the zirconia particle (A1) of the alkaline zirconia (A1) sol adsorbs metal ion of the above compound (B1) well. As a result, a mixture of zirconia derived from the alkaline zirconia (A1) sol with a precursor of a metal oxide derived from the compound (B1) is formed. This is the (A2) sol and metal oxide particle (A3) obtained from drying and calcination of the (A2) sol can easily be solid-solubilized.
Mixing of the alkaline zirconia (A1) sol with yttrium, aluminum, cerium, and scandium compounds used as the above compound (B1) can be attained through a method in which the alkaline zirconia (A1) sol is added in an aqueous solution prepared by dispersing the compound (B1) in water, a method in which an aqueous solution prepared by dispersing the compound (B1) in water is added to the alkaline zirconia (A1) sol, or a method in which both are mixed concomitantly.

In the first method of the present invention according to some aspects described in the present application, zirconia (A2) sol containing a precursor of a metal oxide can be heated as necessary in the step (I). Although a temperature of this heat treatment is not limited, heating is preferably performed at 50-150°C and is more preferably performed at 80-150°C. This heat treatment is preferably performed for 0.5 to 24 hours. This heat treatment accelerates solid-solubilization.
A method for drying this zirconia (A2) sol containing a precursor of a metal oxide after mixing of the alkaline zirconia (A1) sol with yttrium, aluminum, cerium, and scandium compounds used as the compound (B1) is not limited and, therefore, can include a method for spray-drying the mixture as it is and a method for drying in a drying machine.
After drying of the zirconia (A2) sol containing a precursor of a metal oxide, the zirconia particle (A3) in which metal oxides are solid-solubilized through calcination.

The metal oxide is an oxide of a metal element different from original metal oxide (e.g. zirconia). This metal oxide is derived from the compound (B1) containing an element selected from a group consisting of the group II and group III elements of the periodic table.
Although dried powder can be pre-sintered as it is, productivity may possibly be decreased during grinding after calcination due to hardness of pre-sintered powder, and therefore it is preferably grinded to some extent for refinement after a step of drying.
The conditions of calcination are sustained at a calcining temperature of 500-1200°C for 0.5-20 hours. A rate of temperature increase is preferably 0.5-10°C/min. Unpreferably, a sustaining duration of shorter than 0.5 hour does not provide uniform calcination, while a duration of longer than 20 hours causes decrease in productivity. In addition, a temperature increase rate of less than 0.5°C/min. prolongs duration until a preset temperature is attained, while a temperature increase rate of higher than 10°C/min. scatters the powder during calcination, leading to less operability and decreased productivity.

The obtained zirconia particle (A3) in which metal oxides are solid-solubilized is metal oxide solid solution particle such as ZrO₂-Y₂O₃ particle, ZrO₂-Al₂O₃ particle, ZrO₂-CeO₂ particle, ZrO₂-Sc₂O₃ particle, ZrO₂-CaO particle, ZrO₂-MgO particle, ZrO₂-Y₂O₃-CeO₂ particle, ZrO₂-Al₂O₃-CeO₂ particle.
The zirconia particle (A3) in which metal oxides are solid-solubilized, that is obtained through calcination, has a particle size of 20-1000 nm, specific surface area of 1-100 m²/g, and alkaline sol or acid sol can be easily obtained by dispersing pre-sintered powder in water to which alkaline or acid substance is further added followed by dispersion. A sol of the zirconia particle (A3) in which metal oxides are solid-solubilized obtained by wet grinding of the zirconia particle (A3) in which metal oxides are solid-solubilized obtained through calcination has a particle size of 10-400 nm.

As alkaline substance, sodium hydroxide, ammonia, quaternary ammonium or the like can be added, while, acid substance such as hydrochloric acid, nitric acid, acetic acid can be added. A method for dispersion treatment includes a method using a ball mill, pearl mill, sand grinder, or the like.

A well-coated dense sintered film can be obtained by applying the sol of the zirconia particle (A3) in which metal oxides are solid-solubilized obtained using the above-described method on a base such as an alumina plate, drying, and firing. Then, a method for adding, to a sol of this zirconia particle (A3), a sol of the alkaline metal oxide (A1) obtained by a method including a step (i) for heating the zirconium salt (B2) and the compound (B3) containing an element selected from a group consisting of the group II and group III elements of the periodic table at 60-110°C in an aqueous medium containing a carbonate of quaternary ammonium and a step (ii) for performing a hydrothermal treatment at 110-250°C or further a method for combining sol of the zirconia particle (A3) of a different particle size can produce a well balanced mixed sol containing large to small particle that can be made into a more dense film in which particles are closely packed by applying, drying, and firing.

A second method of the present invention according to some aspects described in the present application is a method for producing metal oxide particle (A3) in which metal oxides are solid-solubilized, that includes a step (I) for obtaining a sol of a metal oxide (A2') containing a precursor of a metal oxide by mixing a sol of an alkaline metal oxide (A1'), which is obtained by a method including a step (i) for heating a zirconium salt (B2) and a compound (B3) containing an element selected from a group consisting of the group II and group III elements of the periodic table at 60-110°C in an aqueous medium containing a carbonate of quaternary ammonium and a step (ii) for performing a hydrothermal treatment at 110-250°C, with a compound (B1) containing an element selected from a group consisting of the group II and group III elements of the periodic table; and a step (II) for drying the thus-obtained sol and then firing at a temperature of 500-1200°C.
In the second method, the step (i) preferably includes mixing of the zirconium salt (B2) with the compound (B3) at a mass ratio Bs/As of 0.01-1.0, where the mass (As) is obtained by conversion of a solid content of the zirconium salt (B2) into ZrO₂, and the mass (Bs) is obtained by conversion of a solid content of the compound (B3) containing an element selected from a group consisting of the group II and group III elements of the periodic table into a metal oxide.
Then, in the second method, the step (I) preferably includes mixing of an (A1') sol with a compound (B1) at a mass ratio Bs/As of 0.01-1.0, or 0.02-0.8, or 0.03-0.5, where the mass (As) is obtained by conversion of a solid content of the (A1') sol into a metal oxide, and the mass (Bs) is obtained by conversion of a solid content of the compound (B1) containing an element selected from a group consisting of the group II and group III elements of the periodic table into a metal oxide.
The zirconium salt (B2) and the compound (B1) containing an element selected from a group consisting of the group II and group III elements of the periodic table used in the second method can be the same as the first method, and the compound (B3) containing an element selected from a group consisting of the group II and group III elements of the periodic table can be those within the same range exemplified as the compound (B1) containing an element selected from a group consisting of the group II and group III elements of the periodic table.

Through the step (I) of the second method, a sol of the alkaline metal oxide (A1') is obtained by heating the zirconium salt (B2) and the compound (B3) containing an element selected from a group consisting of the group II and group III elements of the periodic table at 60-110°C in an aqueous medium containing a carbonate of quaternary ammonium and then performing a hydrothermal treatment at 110-250°C. Then, a sol of the metal oxide (A2') containing a precursor of a metal oxide can be obtained by mixing the thus-obtained sol of the alkaline metal oxide (A1') with the compound (B1) containing an element selected from a group consisting of the group II and group III elements of the periodic table.
The zirconium salt (B2) and the compound (B3) containing an element selected from a group consisting of the group II and group III elements of the periodic table, for which hydrothermal treatment was performed at 110-250°C in the step (ii), formed a metal oxide, which is to be a sol of an alkaline metal oxide (A1'). The compound (B1) containing an element selected from a group consisting of the group II and group III elements of the periodic table that was added to this sol of the alkaline metal oxide (A1') is a precursor of a metal oxide. Therefore, a mixture of a precursor of a metal oxide derived from the compound (B1) and a metal oxide derived from a sol of the alkaline metal oxide (A1') is a sol of the metal oxide (A2') containing a precursor of a metal oxide.

In the step (I) of the second method, an operation similar to the step (I) of the first method is conducted. A sol of the alkaline metal oxide (A1') has properties including a pH value of 8-12, a specific surface area of 50 m²/g-300 m²/g, a concentration of 30-60% by mass, an electric conductivity of 2000-10000 µS/cm, a viscosity of 1-30 mPa·s. A particle size falls within a range of 10-200 nm.
This sol of the alkaline metal oxide (A1') exists stably for 1 month or longer under the condition of 50°C.

Through the step (II) of the second method, the metal oxide particle (A3') in which metal oxides are solid-solubilized is obtained through the step (II) for drying obtained sol of the metal oxide (A2') containing a precursor of a metal oxide and firing at a temperature of 500-1200°C.
The metal oxide particle (A3') in which metal oxides are solid-solubilized that is obtained through calcination has a particle size of 20-1000 nm and a specific surface area of 1-100 m²/g, and an alkaline sol or a acid sol can easily be obtained by dispersing the pre-sintered powder in water and further adding alkaline or acid substance followed by dispersing. A sol of the metal oxide particle (A3') in which metal oxides are solid-solubilized, obtained by wet grinding of the metal oxide particle (A3') in which metal oxides are solid-solubilized, obtained through calcination, has a particle size of 10-400 nm.

In the present invention according to some aspects described in the present application, the zirconia (A2) or a sol of the metal oxide (A2') containing a precursor of a metal oxide, that is obtained by mixing the alkaline zirconia (A1) sol or alkaline metal oxide (A1') with a large specific surface area (porous matter) with the compound (B1) containing an element selected from a group consisting of the group II and group III elements of the periodic table, can be made into a solid solution even at relatively low temperature due to efficient entrance of a component (B1) into (A1) particle or (A1') particle. Also, a particle size of a final product particle of a solid solution (A3) or particle of a solid solution (A3') can be controlled by preparing a desired particle size of an initial (A1) sol or (A1') sol due to a series of steps through which pre-sintered particle of the solid solution (A3) or particle of the solid solution (A3') after obtaining the (A2) sol or (A2') sol after mixing the (A1) sol or (A1') sol with a (B1) component by controlling a particle size of the (A1) sol or (A1') sol.

Conventional method for obtaining a solid solution of a metal oxide by simultaneously hydrolyzing salts in an aqueous solution followed by drying and pre-calcining is difficult to control a particle size of a final product and needs essentially for removal of by-produced salts before firing to form a solid solution during the step; therefore, washing is required and a molar ratio was changed due to an element outflowed during the washing. However, the present invention according to some aspects described in the present application does not need them, therefore, the above-mentioned problems can be resolved.
A binary metal oxide containing zirconia can be obtained through the first method, while the second method is preferable for a ternary metal oxide containing zirconia. In the first method, it is possible to obtain a ternary metal oxide containing zirconia by adding the (B1) component as 2 components from 2 elements. Then, the (B1) component added as 2 components from 2 elements may cause localization of these 2 components from some elements, therefore, a ternary metal oxide is preferably produced using the second method.

### Examples

### [Example 1]

Into a 3-litter glass container, 1306.1 g of aqueous solution of tetramethylammonium hydrogen carbonate (manufactured by Tama Chemicals Co., Ltd.; contained 44.5% by mass as tetramethylammonium hydroxide) and 592.2 g of pure water were put to obtain a diluted aqueous solution. With stirring this aqueous solution, a total of 801.7 g of zirconium oxycarbonate powder (B2) (ZrOCO₃; manufactured by Daiichi Kigenso Kagaku Kogyo Co., Ltd; contained 42.1 % by mass as ZrO₂) was added little by little into the aqueous solution. After the completion of adding, this mixture was heated to 105°C with stirring, and was matured at 105°C for 6 hours with adding pure water as appropriately to adjust a concentration. At the end of this maturation, the mixture was in slurry form, containing 12.5% by mass as ZrO₂, and was pH 10.7. This slurry was transferred into a stainless autoclave vessel to perform hydrothermal synthesis reaction at 140°C for 3 hours with stirring. Resulting after this reaction was completely solated without non-dissolved matter, containing 12.5% by mass as ZrO₂, and was pH 10.0. Next, using an ultrafiltration device, this sol was washed and condensed with adding pure water little by little, and 711 g of a zirconia (A1) sol with ZrO₂ concentration as high as 42.7% by mass was obtained. Thus-obtained alkaline zirconia (A1) sol had a specific gravity of 1.576, a pH of 9.5, a viscosity of 5.5 mPa·s, a tetramethylammonium hydroxide concentration (titration) of 1.0% by mass, a particle size of 77 nm according to a dynamic light scattering method. With the dynamic light scattering method, a particle size of particle in a sol can be observed and a mean particle size can be observed for aggregated particles. Confirmation of particle using a transmission electron microscope revealed that most particles were aggregation or binding of primary particles with a particle size of around 10-nm and had a size of 20-150 nm per one aggregated particle. This sol of zirconia was stable for more than 1 month under the condition of 50°C with no precipitation.

Next, 405.5 g of yttrium nitrate aqueous solution containing 15.0% by mass as Y₂O₃ and 93.5 g of pure water were put into a 2-L glass container. With stirring this solution, a total of 700.0 g of the above obtained alkaline zirconia (A1) sol containing 42.7% by mass as ZrO₂ was added little by little and stirred for 1 hour after adding to obtain a zirconia (A2) sol containing a precursor of yttrium oxide. This mixture contained a solid content of ZrO₂ and Y₂O₃ at a total of 30.0% by mass and had a mixing ratio (molar ratio) of a solid content as ZrO₂ in an alkaline zirconia (A1) sol with a solid content as Y₂O₃ in an yttrium nitrate (B1) aqueous solution of 9:1 and a pH of 3.4. This mixture as a raw material was heated to 95°C with stirring and further heated for 3 hours at 95°C. After that, this heat-treated solution was transferred to a SUS container to dry in a drying machine at 120°C for 5 hours followed by grinding using a mixer to obtain dried powder. This dried powder was heated up to 900°C at a rate of 5°C/min., pre-sintered at 900°C for 5 hours to obtain zirconia particle (A3) in which yttrium oxide is solid-solubilized. This particle had a BET specific surface area of 25 m²/g and showed almost no peak for the monoclinic crystal of zirconium oxide or no peak derived from yttrium oxide based on the X-ray diffraction pattern, indicating that yttrium oxide is completely solid-solubilized.

Next, 150.0 g of the above obtained zirconia (A3) particle in which yttrium oxide is solid-solubilized and 150.0 g of pure water were put into a 500-mL plastic container. With stirring this solution, 1.0 g of 25.0% by mass tetramethylammonium hydroxide aqueous solution was added followed by stirring for 1 hour after adding. This mixture contained a solid content of ZrO₂ and Y₂O₃ at a total of 50.0% by mass and had a pH of 12.0. This mixture was transferred to a container used only for sand grinding, 700.0 g of zirconia beads with a diameter of 1 mm was put thereinto, and beads mill dispersion treatment was performed at a number of revolutions of 1500 r.p.m. for 6 hours. After the end of the treatment, a zirconia sol in which yttrium oxide was solid-solubilized was obtained by recovering with water washing. Thus-obtained sol of zirconia had a ZrO₂ concentration of 41.8% by mass, a specific gravity of 1.532, a pH of 11.7, a viscosity of 4.1 mPa·s, a particle size of 177 nm according to a dynamic light scattering method. Confirmation of particle using a transmission electron microscope revealed that aggregated particle in which primary particles with a size of around 10-nm aggregate or bind with each other was compacted closely into completely one particle due to calcination and had a size of 30-250 nm per one particle. Then, condensation of this sol of zirconia using a rotary evaporator under a reduced pressure produced a zirconia sol in which yttrium oxide is solid-solubilized with ZrO₂ concentration as high as 65.0% by mass.

### [Example 2]

Under the same conditions as Example 1, dried powder containing zirconia and yttria was obtained. This dried powder was heated up to 1100°C at a rate of temperature increase of 5°C/min., pre-sintered at 1100°C for 3 hours to obtain zirconia particle (A3) in which yttrium oxide is solid-solubilized. This particle had a BET specific surface area of 9 m²/g and showed almost no peak for the monoclinic crystal of zirconium oxide or no peak derived from yttrium oxide based on the X-ray diffraction pattern, indicating that yttrium oxide is completely solid-solubilized.

Next, 150.0 g of the above obtained zirconia particle in which yttrium oxide is solid-solubilized and 150.0 g of pure water were put into a 500-mL plastic container. With stirring this solution, 0,7 g of 25.0% by mass tetramethylammonium hydroxide aqueous solution was added followed by stirring for 1 hour after adding. This mixture contained a solid content of ZrO₂ and Y₂O₃ at a total of 50.0% by mass and had a pH of 11.7. This mixture was transferred to a container used only for sand grinding, 700.0 g of zirconia beads with a diameter of 1 mm was put thereinto, and beads mill dispersion treatment was performed at a number of revolutions of 1500 r.p.m. for 6 hours. After the end of the treatment, a zirconia sol in which yttrium oxide was solid-solubilized was obtained by recovering with water washing. Thus-obtained sol of zirconia had a ZrO₂ concentration of 40.6% by mass, a specific gravity of 1.500, a pH of 11.4, a viscosity of 4.0 mPa·s, a particle size of 189 nm according to a dynamic light scattering method. Confirmation of particle using a transmission electron microscope revealed that aggregated particle in which primary particles with a size of around 10-nm aggregate or bind with each other was compacted closely into completely one particle due to calcination and had a size of 50-400 nm per one particle. Then, condensation of this sol of zirconia using a rotary evaporator under a reduced pressure produced a zirconia sol in which yttrium oxide is solid-solubilized with ZrO₂ concentration as high as 70.0% by mass.

Next, 46.2 g of a zirconia sol with ZrO₂ concentration of 65.0% by mass obtained in Example 1 and 142.9 g of a zirconia sol with ZrO₂ concentration of 70.0% by mass obtained in Example 2 were mixed. This mixture had a mixing ratio (solid content ratio) of ZrO₂ solid content of a zirconia sol of Example 1 with ZrO₂ solid content of a zirconia sol of Example 2 of 3:10. This mixture was dried at 120°C for 5 hours in a drying machine followed by grinding using a mixer to obtain dried powder. This dried powder was used for making a molded product using press molding, and resulting molded product was heated up to 1300°C at a rate of temperature increase of 7°C/min., pre-sintered at 1300°C for 5 hours to obtain sintered product. This sintered product, which was used for determining a volume conductivity using an alternating current four terminal method, had a conductivity of 1.0 x 10⁻¹S/cm at 1000°C

### [Example 3]

Into a 2-L glass container, 855.0 g of cerium nitrate (B1) aqueous solution containing 5.3% by mass as CeO₂ was put. With stirring this solution, a total of 428.9 g of an alkaline zirconia (A1) sol containing 42.7% by mass as ZrO₂ obtained in Example 1 was added little by little and stirred for 1 hour after adding to obtain a zirconia (A2) sol containing a precursor of cerium oxide. This mixture contained a solid content of ZrO₂ and CeO₂ at a total of 17.8% by mass and had a mixing ratio (molar ratio) of a solid content as ZrO₂ in an alkaline zirconia (A1) sol with a solid content as CeO₂ in a cerium nitrate (B1) aqueous solution of 85:15 and a pH of 4.4. This mixture as a raw material was heated to 95°C with stirring and further heated at 95°C for 3 hours. After that, this heat-treated solution was transferred to a SUS container to dry in a drying machine at 120°C for 5 hours followed by grinding using a mixer to obtain dried powder. This dried powder was heated up to 900°C at a rate of temperature increase of 5°C/min., pre-sintered at 900°C for 5 hours to obtain zirconia particle (A3) in which cerium oxide is solid-solubilized. This particle had a BET specific surface area of 31 m²/g and showed almost no peak for the monoclinic crystal of zirconium or no peak derived from cerium oxide based on the X-ray diffraction pattern, indicating that cerium oxide is completely solid-solubilized.

### [Example 4]

Into a 2-L glass container, 723.0 g of calcium nitrate (B1) aqueous solution containing 1.7% by mass as CaO was put. With stirring this solution, a total of 571.9 g of an alkaline zirconia (A1) sol containing 42.7% by mass as ZrO₂ obtained in Example 1 was added little by little and stirred for 1 hour after adding to obtain a zirconia (A2) sol containing a precursor of calcium oxide. This mixture contained a solid content of ZrO₂ and CaO at a total of 19.8% by mass and had a mixing ratio (molar ratio) of a solid content as ZrO₂ in the alkaline zirconia (A1) sol with a solid content as CaO in a calcium nitrate (B 1) aqueous solution of 9:1 1 and a pH of 6.1. This mixture as a raw material was heated to 95°C with stirring and further heated at 95°C for 3 hours. After that, this heat-treated solution was transferred to a SUS container to dry in a drying machine at 120°C for 5 hours followed by grinding using a mixer to obtain dried powder. This dried powder was heated up to 900°C at a rate of temperature increase of 5°C/min., pre-sintered at 900°C for 5 hours to obtain zirconia particle (A3) in which calcium oxide is solid-solubilized. This particle had a BET specific surface area of 26 m²/g and showed almost no peak for the monoclinic crystal of zirconium oxide or no peak derived from calcium oxide based on the X-ray diffraction pattern, indicating that calcium oxide is completely solid-solubilized.

### [Example 5]

Into a 3-litter glass container, 1126.5 g of aqueous solution of tetramethylammonium hydrogen carbonate (manufactured by Tama Chemicals Co., Ltd.; containing 44.5% by mass as tetramethylammonium hydroxide) and 932.9 g of pure water were put to obtain a diluted aqueous solution. With stirring this aqueous solution, a total of 786.4 g of zirconium oxycarbonate powder (ZrOCO₃, manufactured by DAIICHI KIGENSO KAGAKU KOGYO CO., LTD.; containing 42.1 % by mass as ZrO₂ was added little by little into the aqueous solution. After the completion of adding, a total of 58.2 g of yttrium carbonate trihydrate (B3) (KANTO CHEMICAL CO., INC.; containing 54.9% by mass as Y₂O₃) was successively added little by little into the aqueous solution.
This mixture was heated to 105°C with stirring, and was matured at 105°C for 6 hours with adding pure water as appropriately to adjust a concentration. At the end of this maturation, the mixture was in slurry form, contained a solid content of ZrO₂ and Y₂O₃ at a total of 12.5% by mass, and had a mixing ratio (molar ratio) of a solid content as ZrO₂ in the zirconium oxycarbonate powder (B2) with a solid content asY₂O₃ in the yttrium carbonate trihydrate (B3) of 95:5 and a pH of 11.3. This slurry was transferred into a stainless autoclave vessel to perform hydrothermal synthesis reaction at 145°C for 5 hours with stirring. Resulting after this reaction was completely solated without non-dissolved matter, contained a solid content of ZrO₂ and Y₂O₃ at a total of 12.5% by mass, and was pH 10.4. Next, using an ultrafiltration device, this sol was washed and condensed with adding pure water little by little, and 973 g of a composite sol of yttrium oxide-zirconium oxide (A1') containing a solid content of ZrO₂ and Y₂O₃ at a total of 31.7% by mass was obtained. Thus-obtained sol had a specific gravity of 1.370, a pH of 9.6, a viscosity of 17.0 mPa·s, a tetramethylammonium hydroxide concentration (titration) of 0.6% by mass, a particle size of 66 nm according to a dynamic light scattering method. With the dynamic light scattering method, a particle size of particle in a sol can be observed and a mean particle size can be observed for aggregated particles. Confirmation of particle using a transmission electron microscope revealed that most particles were aggregation or binding of primary particles with a size of around 10-nm and had a size of 10-100 nm per one aggregation. To 1 g of this sol, 2 g of sulfuric acid and 5 g of water were added followed by dissolving by heating to obtain a diluted dissolving solution by high dilution with water. Determining a content of ZrO₂ and Y₂O₃ in this diluted dissolving solution using an ICP emission spectral analysis revealed that ZrO₂:Y₂O₃ (molar ratio) was 95:5. Also, this sol was stable for more than 1 month under the condition of 50°C with no precipitation.

Next, 649.0 g of cerium nitrate (B1) aqueous solution containing 5.3% by mass as CeO₂ was put into a 2-L glass container. With stirring this solution, a total of 500.0 g of the above obtained composite sol of the yttrium oxide-zirconium oxide (A1') containing a solid content of ZrO₂ and Y₂O₃ at a total of 31.7% by mass was added little by little and stirred for 1 hour after adding to obtain a zirconia (A2') sol containing a precursor of cerium oxide. This mixture contained a solid content of ZrO₂, Y₂O₃, and CeO₂ at a total of 16.2% by mass and had a mixing ratio (molar ratio) of ZrO₂, Y₂O₃, and CeO₂ as ZrO₂:Y₂O₃:CeO₂ of 81.4:4.2:14.4 and a pH of 4.7. This mixture as a raw material was heated to 95°C with stirring and further heated at 95°C for 3 hours. After that, this heat-treated solution was transferred to a SUS container to dry in a drying machine at 120°C for 5 hours followed by grinding using a mixer to obtain dried powder. This dried powder was heated up to 900°C at a rate of temperature increase of 5°C/min., pre-sintered at 900°C for 5 hours to obtain the zirconia particle (A3') in which yttrium oxide and cerium oxide are solid-solubilized. This particle had a BET specific surface area of 39 m²/g and showed almost no peak for the monoclinic crystal of zirconium oxide or no peak derived from yttrium oxide or cerium oxide based on the X-ray diffraction pattern, indicating that yttrium oxide and cerium oxide are completely solid-solubilized.

### [Example 6]

Into a 2-L glass container, 142.8 g of yttrium nitrate (B1) aqueous solution containing 15.0% by mass as Y₂O₃ and 328.3 g of pure water were put. With stirring this solution, a total of 700.0 g of a composite sol of yttrium oxide-zirconium oxide (A1') containing a solid content of ZrO₂ and Y₂O₃ at a total of 31.7% by mass obtained in Example 5 was added little by little and stirred for 1 hour after adding to obtain a zirconia sol (A2') containing a precursor of yttrium oxide. This mixture contained a solid content of ZrO₂ and Y₂O₃ at a total of 20.0% by mass and had a total mixing ratio (molar ratio) of a solid content of ZrO₂ and Y₂O₃ of 9:1 and a pH of 4.6. This mixture as a raw material was heated to 95°C with stirring and further heated at 95°C for 3 hours. After that, this heat-treated solution was transferred to a SUS container to dry in a drying machine at 120°C for 5 hours followed by grinding using a mixer to obtain dried powder. This dried powder was heated up to 900°C at a rate of temperature increase of 5°C/min., pre-sintered at 900°C for 5 hours to obtain zirconia particle (A3') in which yttrium oxide is solid-solubilized. This particle had a BET specific surface area of 33 m²/g which was a larger specific surface area than 25 m²/g for the zirconia particle (A3) of Example 1 despite the fact that a total mixing ratio of ZrO₂ with Y₂O₃ and firing conditions were the identical. This is because a composite sol of the yttrium oxide-zirconium oxide (A1') used in Example 6 had a smaller size of aggregated particle relatively compared with the alkaline zirconia (A1) sol used in Example 1; therefore, calcining these sols under the same conditions results into a smaller particle size, that is, a larger specific surface area, of an (A1') sol, indicating that a particle size of the solid solution (A3) particle or solid solution (A3') particle as an end-product can be controlled by adjusting an initial particle size of (A1) or (A1'). Almost no peak for the monoclinic crystal of zirconium oxide or no peak derived from yttrium oxide based on the X-ray diffraction pattern, indicating that yttrium oxide is completely solid-solubilized.

### [Example 7]

Into a 2-L glass container, 405.5 g of yttrium nitrate (B1) aqueous solution containing 15.0% by mass as Y₂O₃ and 93.5 g of pure water were put. With stirring this solution, a total of 700.0 g of an alkaline zirconia (A1) sol containing 42.7% by mass as ZrO₂ obtained in Example 1 was added little by little and stirred for 1 hour after adding to obtain a zirconia (A2) sol containing a precursor of yttrium oxide. This mixture contained a solid content of ZrO₂ and Y₂O₃ at a total of 30.0% by mass and had a mixing ratio (molar ratio) of a solid content as ZrO₂ in the alkaline zirconia (A1) sol with a solid content as Y₂O₃ in the yttrium nitrate (B1) aqueous solution of 9:1 and a pH of 3.4. This mixture as a raw material was heated to 95°C with stirring and further heated for 3 hours at 95°C. After that, this heat-treated solution was transferred to a SUS container to dry in a drying machine at 120°C for 5 hours followed by grinding using a mixer to obtain dried powder. This dried powder was heated up to 700°C at a rate of 5°C/min., pre-sintered at 700°C for 5 hours to obtain zirconia particle (A3) in which yttrium oxide is solid-solubilized. This particle had a BET specific surface area of 41 m²/g and showed almost no peak for the monoclinic crystal of zirconium oxide or no peak derived from yttrium oxide based on the X-ray diffraction pattern, indicating that yttrium oxide is completely solid-solubilized.

### [Comparative Example 1]

An alkaline zirconia (A1) sol obtained in Example 1 was put into a drying machine to dry in a drying machine at 120°C for 5 hours followed by grinding using a mixer to obtain dried powder. This dried powder was pre-sintered at 700°C for 5 hours to obtain zirconia powder. Next, 150.0 g of dried powder and 150.0 g of pure water were put into a 500-mL plastic container. With stirring this solution, 1.2 g of 25.0% by mass tetramethylammonium hydroxide aqueous solution was added and stirred for 1 hour after adding. This mixture contained 50.0% by mass as ZrO₂ and had a pH of 11.2. This mixture was transferred to a container used only for sand grinding, 700.0 g of zirconia beads with a diameter of 1 mm was put thereinto, and beads mill dispersion treatment was performed at a number of revolutions of 1500 r.p.m. for 6 hours. After the end of the treatment, a zirconia sol was obtained by recovering with water washing. Thus-obtained sol of zirconia had a ZrO₂ concentration of 41.2% by mass, a specific gravity of 1.520, a pH of 11.0, a viscosity of 5.0 mPa·s, a particle size of 145 nm according to a dynamic light scattering method. Confirmation of particle using a transmission electron microscope revealed that aggregated particle in which primary particles with a size of around 10-nm aggregate or bind with each other was compacted closely into completely one particle due to calcination and had a size of 30-200 nm per one particle.

Next, 145.3 g of yttrium nitrate (B1) aqueous solution containing 15.0% by mass as Y₂O₃ and 24.4 g of pure water were put into a 1-L glass container. With stirring this solution, a total of 260.0 g of the above obtained sol of zirconia containing 41.2% by mass as ZrO₂ was added little by little and stirred for 1 hour after adding to obtain a mixture as a raw material. This mixture contained a solid content of ZrO₂ and Y₂O₃ at a total of 30.0% by mass and had a mixing ratio (molar ratio) of a solid content of ZrO₂ in a zirconia sol with a solid content of Y₂O₃ in an yttrium nitrate aqueous solution of 9:1 and a pH of 3.4. This mixture as a raw material was heated to 95°C with stirring and further heated for 3 hours at 95°C. After that, this heat-treated solution was transferred to a SUS container to dry in a drying machine at 120°C for 5 hours followed by grinding using a mixer to obtain dried powder. This dried powder was heated up to 900°C at a rate of temperature increase of 5°C/min., pre-sintered at 900°C for 5 hours to obtain zirconia particle. This particle had a BET specific surface area of 12 m²/g and showed sparse peaks for the monoclinic crystal of zirconium oxide based on the X-ray diffraction pattern, indicating that yttrium oxide is only partially solid-solubilized.

### [Comparative Example 2]

Into a 1-L glass container, 296.8 g of a cerium nitrate (B1) aqueous solution containing 5.3% by mass as CeO₂ was put. With stirring this solution, a zirconia sol used in Comparative Example 1 (a zirconia sol containing 41.2% by mass as ZrO₂ obtained by beads mill treatment of powder obtained through firing at 700°C for 5 hours of dried powder of the alkaline zirconia (A1) sol obtained in Example 1) was added little by little to a total of 154.4 g and stirred for 1 hour after putting to obtain a mixture as a raw material. This mixture contained a solid content of ZrO₂ and CeO₂ at a total of 17.6% by mass and had a mixing ratio (molar ratio) of a solid content as ZrO₂ in a zirconia sol with a solid content as CeO₂ in a cerium nitrate aqueous solution of 85:15 and a pH of 4.8. This mixture as a raw material was heated to 95°C with stirring and further heated at 95°C for 3 hours. After that, this heat-treated solution was transferred to a SUS container to dry in a drying machine at 120°C for 5 hours followed by grinding using a mixer to obtain dried powder. This dried powder was heated up to 900°C at a rate of temperature increase of 5°C/min., pre-sintered at 900°C for 5 hours to obtain zirconia particle. This particle had a BET specific surface area of 20 m²/g and showed sparse peaks for the monoclinic crystal of zirconium oxide based on the X-ray diffraction pattern, indicating that yttrium oxide is only partially solid-solubilized.

### [Comparative Example 3]

Into a 1-L glass container, 301.8 g of calcium nitrate (B1) aqueous solution containing 1.7% by mass as CaO was put. With stirring this solution, a zirconia sol used in Comparative Example 1 (a zirconia sol containing 41.2% by mass ZrO₂ obtained by beads mill treatment of powder obtained through firing at 700°C for 5 hours of dried powder of an alkaline zirconia (A1) sol obtained in Example 1) was added little by little to a total of 247.0 g and stirred for 1 hour after putting to obtain a mixture as a raw material. This mixture contained a solid content of ZrO₂ and CaO at a total of 19.5% by mass and had a mixing ratio (molar ratio) of a solid content as ZrO₂ in a zirconia sol with a solid content as CaO in a calcium nitrate aqueous solution of 9:1 and a pH of 7.3. This mixture as a raw material was heated to 95°C with stirring and further heated at 95°C for 3 hours. After that, this heat-treated solution was transferred to a SUS container to dry in a drying machine at 120°C for 5 hours followed by grinding using a mixer to obtain dried powder. This dried powder was heated up to 900°C at a rate of temperature increase of 5°C/min., pre-sintered at 900°C for 5 hours to obtain zirconia particle. This particle had a BET specific surface area of 17 m²/g and showed sparse peaks for the monoclinic crystal of zirconium oxide based on the X-ray diffraction pattern, indicating that calcium oxide is only partially solid-solubilized.

### [Comparative Example 4]

A composite sol of yttrium oxide-zirconium oxide (A1') obtained in Example 5 was dried in a drying machine at 120°C for 5 hours followed by grinding using a mixer to obtain dried powder. This dried powder was pre-sintered at 700°C for 5 hours to obtain composite powder of yttrium oxide-zirconium oxide. Next, 120.0 g of dried powder and 220.0 g of pure water were put into a 500-mL plastic container. With stirring this solution, 0.7 g of 25.0% by mass tetramethylammonium hydroxide aqueous solution was added and stirred for 1 hour after adding. This mixture contained a solid content of ZrO₂ and Y₂O₃ at a total of 35.2% by mass and had a pH of 11.3. This mixture was transferred to a container used only for sand grinding, 700.0 g of zirconia beads with a diameter of 1 mm was put thereinto, and beads mill dispersion treatment was performed at a number of revolutions of 1500 r.p.m. for 6 hours. After the end of the treatment, a composite sol of yttrium oxide-zirconium oxide was obtained by recovering with water washing. Thus-obtained composite sol of yttrium oxide-zirconium oxide contained a solid content of ZrO₂ and Y₂O₃ at a total of 31.2% by mass, ZrO₂ : Y₂O₃ (molar ratio) of 95:5 and had a specific gravity of 1.351, a pH of 11.6, a viscosity of 5.6 mPa·s, a particle size of 287 nm according to a dynamic light scattering method. Confirmation of particle using a transmission electron microscope revealed that aggregated particle in which primary particles with a size of around 10-nm aggregate or bind with each other was compacted closely into completely one particle due to calcination and had a size of 30-300 nm per one particle.

Next, 301.2 g of cerium nitrate (B1) aqueous solution containing 5.3% by mass as CeO₂ was put into a 1-L glass container. With stirring this solution, a total of 226.5 g of the above-obtained composite sol of yttrium oxide-zirconium oxide containing a solid content of ZrO₂ and Y₂O₃ at a total of 31.2% by mass was added little by little followed by stirring for 1 hour after adding to obtain mixture as a raw material. This mixture contained a solid content of ZrO₂, Y₂O₃, and CeO₂ at a total of 16.2% by mass and had a mixing ratio (molar ratio) of ZrO₂, Y₂O₃, and CeO₂ as ZrO₂:Y₂O₃:CeO₂ of 81.4:4.2:14.4 and a pH of 5.6. This mixture as a raw material was heated to 95°C with stirring and further heated at 95°C for 3 hours. After that, this heat-treated solution was transferred to a SUS container to dry in a drying machine at 120°C for 5 hours followed by grinding using a mixer to obtain dried powder. This dried powder was heated up to 900°C at a rate of temperature increase of 5°C/min., pre-sintered at 900°C for 5 hours to obtain zirconia particle. This particle had a BET specific surface area of 31 m²/g and showed almost no peak for the monoclinic crystal of zirconium oxide but sparse peaks derived from cerium oxide based on the X-ray diffraction pattern, indicating that cerium oxide are only partially solid-solubilized.

In Example 1 to Example 6, calcination was performed after addition of the (B1) component to the alkaline zirconia (A1) sol or a sol of the alkaline metal oxide (A1'). This method enables the (B1) component to permeate into a porous particle of the alkaline zirconia (A1) sol or the alkaline metal oxide (A1') sol to generate the (A2) sol or the (A2') sol; therefore, the (B1) component can be adequately solid-solubilized even at a relatively low temperature (700 to 1100°C) of calcination.
However, in Comparative Example 1 to Comparative Example 4, the (B1) component was added after calcining the particle of alkaline zirconia (A1) sol or a sol of the alkaline metal oxide (A1') at 500°C or higher. Therefore, porous aggregate generated through aggregation of primary particles are sintered due to calcination, leading probably to generation of the (A1) sol or the (A1') sol including dense particle without porosity. Therefore, the methods of Comparative Example 1 to Comparative Example 3, including addition of the (B1) component to the (A1) sol and calcination of the resultant substance as the (A2) sol to produce the (A3) particle, does not provide the particle (A3) as a uniform solid solution because of inadequate permeation of the (B1) component into the (A1) sol or the (A1') sol. For the same reason, the method of Comparative Example 4, including addition of the (B1) component to the (A1') sol and calcination of the resultant substance as a raw material mixture liquid to produce zirconia particle, does not provide the particle as a uniform solid solution.

### INDUSTRIAL APPLICABILITY

Metal oxide particle that is obtained from a method of the present invention according to some aspects described in the present application has good formability and is well sintered. A method of the present invention according to some aspects described in the present application enables easy production through a simple process and, especially at a low temperature, is suitable for producing zirconia particle in which calcium oxide, magnesium oxide, yttrium oxide, aluminum oxide, cerium oxide, scandium oxide, or the like is solid-solubilized.
In addition, solid solution of a metal oxide including several metal components can be formed by making a sol of a metal oxide including several metal components through a hydrothermal treatment, adding a precursor of a metal oxide to the sol, and firing after drying.
According to a method of the present invention according to some aspects described in the present application, an alkaline zirconia or alkaline metal oxide sol as a raw material includes porous particle that is obtained through an unique method for production, and the fact that a precursor of a metal oxide, which is added to this sol containing porous particle, permeates deep into a fine pore of the porous particle enables a solid solution to easily be formed in a firing step to form a solid solution even at a relatively low temperature. Therefore, a desired solid solution of a metal oxide can easily be produced using a simple device.
These properties can be utilized in an area of ceramic raw material for structure such as a precision processing part, an optical connector, and a component of a mill; a solid electrolyte used in a solid oxide fuel cell; a solid electrolyte used in a gas sensor that can detect a concentration of oxygen and NOₓ gas in exhaust gas from a engine or the like; or a material for various catalyst carriers.

## Claims

1. A method for producing zirconia particle (A3) in which metal oxides are solid-solubilized, the method comprising:
a step (I) for obtaining zirconia (A2) sol containing a precursor of a metal oxide by mixing an alkaline zirconia (A1) sol which is obtained by a method including a step (i) for heating a zirconium salt (B2) at 60-110°C in an aqueous medium containing a carbonate of quaternary ammonium and a step (ii) for performing a hydrothermal treatment at 110-250°C, with a compound (B1) containing an element selected from a group consisting of the group II and group III elements of the periodic table; and
a step (II) for drying the thus-obtained sol and then firing a resultant substance at a temperature of 500-1200°C.

2. A method for producing metal oxide particle (A3') in which metal oxides are solid-solubilized, the method comprising:
a step (I) for obtaining a sol of a metal oxide (A2') containing a precursor of a metal oxide by mixing a sol of an alkaline metal oxide (A1') which is obtained by a method including a step (i) for heating a zirconium salt (B2) and a compound (B3) containing an element selected from a group consisting of the group II and group III elements of the periodic table at 60-110°C in an aqueous medium containing a carbonate of quaternary ammonium and a step (ii) for performing a hydrothermal treatment at 110-250°C, with a compound (B1) containing an element selected from a group consisting of the group II and group III elements of the periodic table; and
a step (II) for drying the thus-obtained sol and then firing a resultant substance at a temperature of 500-1200°C.

3. The producing method according to claim 1 or 2, wherein the step (I) includes mixing of the (A1) sol or the (A1') sol with the compound (B1) at a mass ratio Bs/As of 0.01-1.0, where the mass (As) is obtained by conversion of a solid content of the (A1) sol or the (A1') sol into a metal oxide, and the mass (Bs) is obtained by conversion of a solid content of the compound (B1) containing an element selected from a group consisting of the group II and group III elements of the periodic table into a metal oxide.

4. The producing method according to claim 2, wherein the step (i) includes mixing of the zirconium salt (B2) with the compound (B3) at a mass ratio Bs/As of 0.01-1.0, where the mass (As) is obtained by conversion of a solid content of the zirconium salt (B2) into ZrO₂, and the mass (Bs) is obtained by conversion of a solid content of the compound (B3) containing an element selected from a group consisting of the group II and group III elements of the periodic table into a metal oxide.

5. The producing method according to any one of claims 1 to 4, wherein the compound (B1) containing an element selected from a group consisting of the group II and group III elements of the periodic table is at least one type of compound selected from a group consisting of calcium compounds, magnesium compounds, yttrium compounds, aluminum compounds, cerium compounds, and scandium compounds.

6. The producing method according to claim 2 or 4, wherein the compound (B3) containing an element selected from a group consisting of the group II and group III elements of the periodic table is at least one type of compound selected from a group consisting of calcium compounds, magnesium compounds, yttrium compounds, aluminum compounds, cerium compounds, and scandium compounds.

7. The producing method according to any one of claims 1 to 6, wherein the zirconium salt (B2) is an oxyzirconium salt.

8. The producing method according to any one of claims 1 to 7, wherein the carbonate of quaternary ammonium is either (NR₄) ₂CO₃, NR₄HCO₃ or a mixture of them (where R represents a hydrocarbon group).

9. The producing method according to claim 8, wherein R represents a methyl group.
